# EUROPEAN PATENT APPLICATION

(11) **EP 0 901 756 A2**
(43) Date of publication of application: **17.03.1999**
(21) Application number: 98114469.4
(22) Date of filing: 31.07.1998
(51) Int. Cl.: A23L 1/217, A23P 1/08

(54) **Method of dry coating potato strips with a starch composition**

(30) Priority: 15.08.1997 US 55749 P; 27.05.1998 US 85290
(71) Applicant: PENFORD CORPORATION, Bellevue, Washington 98004-5193 (US)
(72) Inventor: Rogols, Saul, Golden, Colorado 80401 (US); Woerman, John Harold, Highlands Ranch, Colorado 80126 (US)
(74) Representative: Brown, John David

(57) **Abstract**

The present invention provides a process for preparing a frozen potato product with a film-like coating on the outer surface which coating comprises greater than 60% by weight solids of a starch product including the steps of: cutting the potatoes; blanching the potatoes; dust coating the potatoes with a dry composition comprising greater than 60% by weight solids of a starch product; and freezing the potatoes. Also provided is a method by which the gelatinizable components of a dry coating mixture are mixture are blended and gelatinized prior to forming a dust.

## Description

This application claims priority from Provisional application 60/055,749 filed August 15, 1997.

### BACKGROUND OF THE INVENTION

The present invention relates generally to coated potato products and formulations and methods for coating potato products such as frozen french fries.

Methods for preparing and applying coatings to the outer surfaces of frozen potato products are well known in the art. Murray et al. U.S. Patent No. 3,597,227 disclose a process in which raw potato strips are coated in a hot aqueous solution of modified gelatinized amylose derived from corn or potato starch. The process is said to produce a finished product which has superior strength and rigidity. Van Patten et al., U.S. Patent No. 3,751,268 disclose the coating of blanched potato pieces with a ungelatinized unmodified high amylose starch having a amylose content of at least 50 percent. The coated potato strips are deep fat fried during which the starch in the coating is gelatinized.

El-Hag et al. U.S. Patent No. 4,317,842 discloses the process of dipping blanched potato strips in a aqueous ungelatinized starch slurry to coat the strips, which are next soaked in hot oil to gelatinize the starch in the coating. The strips are then parfried and frozen. The strips may be reheated for consumption by heating in a oven rather than by deep fat frying.

Lenchin et al., WO 85/01188 disclose batters comprising the flour of high amylose corn hybrids for producing microwaveable pre-fried foodstuffs. The use of flours of high amylose corn hybrids is said to provide pre-fried foodstuffs with improved crispness after microwave cooking which otherwise tends to make such products soggy.

Sloan et al., U.S. Patent Nos. 5,059,435 and 5,141,759 disclose a process for preparing frozen coated potatoes wherein raw potatoes are washed, cut, blanched and partially dehydrated. The cut potatoes are then coated with an aqueous starch slurry comprising 15 to 35% by weight modified ungelatinized potato starch, 2 to 10% by weight modified ungelatinized corn starch, 2 to 10% by weight rice flour and other optional ingredients. The coated potato strips are parfried in oil and then frozen. The frozen strips are prepared for consumption by either finish frying in hot oil, or heating in a oven. The starch coating is said to enhance the holding quality of the ready to consume product and to improve the acceptability of the finished product by increasing the crispness of the outer surface, and helping to maintain the tenderness of the interior of the cut potato. In particular, the potato starch and corn starch are said to contribute crispness to the coating, and because they are not gelatinized prior to the parfrying step they decrease clumping of the strips during processing. The rice flour is said to provide a desirable tenderness in the finished product.

The Sloan patents teach the use of potato starches which have been modified through known chemical cross-linking processes in order to minimize sticking or clumping of the strips during processing, and coat the potato strips evenly. The Sloan patents disclose as preferred a ungelatinized chemically modified potato starch (K-1010, Penford Corporation, Richland, WA) which is crosslinked with phosphorus oxychloride (POCl₃) at an effective level of 980 ppm. (This starch is characterized by a Brabender Amylograph viscosity of 50-100 BU ("Brabender units") when measured at a 9% starch solids concentration for 15 minutes at 95 °C.) A chemically modified ungelatinized cornstarch said to be preferred for use in conjunction with the above modified potato starch is said to be Flojel® 60 (National Starch and Chemical Corp., Bridgewater, N.J.) which is a hydrolyzed cornstarch said to contribute crispness to the coating and to produce an optimal result when present in the coating slurry at a concentration of between two and ten percent by weight.

Also of interest to the present application is the disclosure of co-owned U.S. 5,648,110 which discloses use of potato starches with selected crosslinking levels as preferred components of starch enrobbing slurries. Specifically, the patent discloses that potato strips coated with an aqueous starch enrobbing slurry having an as is solids content comprising not less than about 50% by weight of ungelatinized crosslinked potato starch characterized by a viscosity of from 200 to 1100 Brabeneder Units (BU) when measured at 9% solids concentration after 15 minutes at 95°C (which corresponds to a crosslinking level of from 550 to 900 ppm using POCl₃) and from 10 to 25% by weight rice flour provide improved crispness and texture properties. Also of potential interest to the present application is co-owned and copending U.S. Patent Application Serial No. 08/822,031 filed March 24, 1997 which is a continuation-in-part of U.S. 5,648,110 and discloses the use of not less than about 50% by weight of ungelatinized crosslinked potato starch characterized by a viscosity of from 200 to 1100 Brabeneder Units and up to 45% by weight rice flour provided improved crispness properties. Also of potential interest to the present application is co-owned and copending U.S. Patent Application Serial No. 08/791,182, which issued as U.S. Patent No. 5,750,168 May 12, 1998, the disclosure of which is hereby incorporated by reference which is directed to starch enrobbing slurries having a solids content comprising not less than 20% by weight ungelatinized crosslinked tapioca starch characterized by a crosslinking level of from 300 to 1000 ppm. The application teaches the incorporation of rice flour as a component of the enrobbing slurries at solids contents preferably ranging from 10% to 25%.

Also of interest to the present application are the disclosures of Calder et al., U.S. 5,302,410 and Brusacker et al., U.S. 5,393,552 which relate to the use of hydrolyzed starch products such as dextrins and maltodextrins as components of aqueous enrobbing slurries. Specifically, the patents disclose contacting blanched potato strips with an aqueous solution which contains from 3% to 12% by weight of a hydrolyzed starch product characterized by a DE less than 12 and preferably from about 2 to 10. The patents specifically disclose the use of maltodextrins having a DE of 6 and teach against the use of maltodextrins having DE values greater than 12 because such hydrolyzate products promote undesirable browning of the final product. The patents further teach that concentrations of the starch hydrolyzate products greater than 12% are undesirable because "at higher concentrations the surface of the potato strips become slightly tack upon finish frying which promotes undesirable clumping of the potato strips."

Accordingly, there remains a desire in the art for methods by which hydrolyzed starches may be used in elevated quantities without promoting undesirable sticking.

Of further interest to the present invention is the disclosure of Melvej, U.S. Patent No. 5,431,944 which discloses a dry batter mix for french fries comprising from about 1.5% to about 9% by weight of a leavening agent and from about 5% to about 40% by weight of a starch blend comprising a high amylose starch, a starch, from about 1% to about 8% by weight dextrin wherein the weight percent in the batter mix is inversely related to the weight percent of the leavening agent, and about 0.1% to about 2% of a food gum. The specification teaches that the batter mix preferably includes about 2% to about 6%, by weight of dextrin and that the dextrin "provides a tender bite and in improved mouthfeel to the reconstituted food product." The patent further teaches that "[t]he particular amount of dextrin included in the batter mix is inversely related to the amount of leavening agent present in the batter mix. Therefore, as the amount of leavening agent in the batter is increased, the amount of dextrin in the batter mix is decreased, and vice versa. The dextrin mitigates the effects of the leavening agent and provides a more tender crispness. However, if too much dextrin is included in the batter mix the reconstituted food product has a greasy mouthfeel." (Col. 7, lines 18-30).

Of interest to the present invention are the disclosures of patents which relate to methods of applying starch coatings to potato strips in a dry form. Bengtsson et al., U.S. Patent No. 4,272,553 discloses a coating process which includes applying a dry coating directly onto the surface of a vegetable such as a potato to be fried as a method of absorbing the water from the cut potato. The patent discloses that the coating may be formed from a variety of materials including wheat or other cereal flours, soy or other oil seed floors, natural or modified starches from various raw materials, potato granules, potato flakes and potato fibers. The patent teaches the steps of (1) cutting the vegetable, (2) applying the dry coating, (3) blanching the coated vegetable, and (4) parfrying the vegetable.

Shanbhag et al., U.S. Patents Nos. 4,931,296 and 4,931,298 disclose alternative processes for preparation of french fried potatoes for reheating in microwave ovens. According to a first method potatoes are (1) cut, (2) blanched, (3) parfried, and (4) dust-coated with potato granules having 90-95% of its granules at U.S. 40 mesh and which include no more than 8 percent moisture. According to an alternative procedure, potatoes are (1) cut, (2) blanched, (3) dust-coated, and (4) then parfried.

Baisier et al., U.S. Patent No. 5,279,840 discloses a method of producing reduced fat deep fried french fries comprising the steps of (1) cutting potatoes, (2) dust-coating the potatoes with a mixture of amylose and calcium ions such as in a calcium salt, (3) blanching the potatoes, and (4) parfrying the potatoes.

### SUMMARY OF THE INVENTION

The present invention provides improved methods for preparing a frozen potato product with a film-like coating on the outer surface which coating comprises greater than 60% by weight solids of a starch product comprising the steps of: cutting the potatoes; blanching the potatoes; dust coating the potatoes with a dry composition comprising greater than 60% by weight solids of a starch product, parfrying the potatoes in oil; and freezing the potatoes. The present invention also provides an improved process for preparing a frozen potato product with a film coating on the outer surface which coating comprises greater than 20% by weight solids of a starch product wherein the dry composition is pregelatinized and is prepared by the steps comprising (a) blending a starch component with a second gelatinizable component selected from the group consisting of starches, dextrins, flours and gums; (b) subjecting the blend of step (a) to conditions so as to gelatinize the blend; and (c) forming a dust. According to one aspect of the invention the step of parfrying the potatoes in oil may be omitted prior to the freezing step.

The dry coating formulations of the invention are preferably those in which some or all of the gelatinizable components including starches, dextrins, flours, gums and the like have been blended prior to being subjected to gelatinization by cooking(to provide a "pregelled" starch) and prior to their being ground or fragmented to form a dust for application to the potato product as a dry material. "Pregelled" starches are contrasted to "cookup" starches which have not (yet) been subjected to such gelatinization.

Suitable starch products for use according to the invention include modified and derivatized starches. Preferred starch products include hydrolyzed starches with maltodextrins having DEs of from 0.1 to 10 with products having DEs of from 0.2 to 0.8 as disclosed by coowned and copending U.S. Application Serial No. 08/792,543 filed August 9, 1996, the disclosure of which is hereby incorporated by reference, being particularly preferred. Additional solids ingredients preferably include potato starch such as potato starches modified by crosslinking, and rice flour. Other ingredients preferably include soda, sodium acid pyrophosphate (SAPP), gums, minor amounts of pregelled starches and emulsifiers. The methods of the invention provide substantial improvements compared with use of aqueous enrobbing slurries. In particular the use of starch hydrolyzate products such as maltodextrins provide improvements to the problem in the art of undesirable sticking and clustering of french fries during par frying and finish frying which is associated with the use of hydrolyzed starches as components of coating compositions. Other suitable starch products include oxidized starches such as those disclosed in coowned and copending U.S. Provisional Application Serial No. 60/052,000 filed July 9, 1997, the disclosure of which is hereby incorporated by reference, which, like hydrolyzed starches, add crispness to the resulting product and reduce losses of the coating during pickup, drying and during parfrying. Preferred oxidized starches used according to the invention include those characterized by an oxidization level of from 0.2% to 1% chlorine oxidation (based on weight of chlorine, such as in sodium hypochlorite, to weight of dry starch with the chlorination reaction run substantially to completion) with oxidation levels of from 0.4% to 0.8% and about 0.6% based on chlorine oxidation being particularly preferred. The oxidized starches maybe of any type of starch but corn and potato starches are preferred with tapioca starch being particularly preferred for use according to the invention. While crosslinked starches provide useful properties such as crispness and reduced oil absorption to the french fry products of the invention they are sometimes characterized by higher losses during pickup and frying which reduces the efficiency of the coating process and increases its expense.

According to one aspect of the invention, the dry dust-coating composition may be prepared by combining pregelled starch components, with the other dry components of the composition such as flours, dextrins, gums, leavening agents and the like. These components may be subjected to conventional blending steps including dry or wet blending, roll drying, grinding and milling to produce suitable dry dusting compositions. According to a preferred aspect of the invention it has been found that improved dry coating compositions may be obtained by dry blending the starch components of the formulation with the non-starch carbohydrate components such as flours, dextrins and gums and subjecting the blend of these components to a cooking step so as to gelatinize the starch components in the presence of the other non-starch carbohydrate components of the composition. The resulting product including the gelatinized starch component may then be milled to granulate the product and combined with additional components of the formulation including components of the leavening system including salt, soda, SAPP and the like which can be added followed by a second milling to produce a dry dust-coating composition. It has been found that the dry dust coating compositions so produced result in frozen potato products having superior crispness properties compared to similar products in which the starch components were pregelled prior to combination with the other carbohydrate components of the composition.

### DETAILED DESCRIPTION

Processes for the production of frozen potato products ("french fries") are well known and include the basic steps of preparing raw potatoes by washing, peeling and cutting into appropriately shaped pieces. The resulting potato strips are then blanched according to conventional methods in order to inactivate enzymes in the potato and to leach sugars from the surface of the potato strip. According to one preferred method, the blanched potato strips are treated in a brine solution comprising components such as sodium chloride, dextrose and other ingredients known to the art. After these steps, the potato strips are then subjected to a drying step to reduce the moisture present in the strips.

The dusting composition is applied to coat the cut potato strips at a batter pickup of from about 8% to about 30% with a pickup of from 10% to about 25% being preferred and a coating pickup of about 20% being particularly preferred, (based on coated potato strips weight).

After coating with the coating composition, the potato strips may optionally be parfried at a temperature of from about 360°F to about 390°F for a time period of from 40 seconds to about 90 seconds. Parfrying serves to gelatinize the starch of the potato strips and of the coating and removes moisture from the inside of the potato strip. Nevertheless, according to one aspect of the present invention, the potato strips may be frozen after the coating step thus omitting the step of parfrying. Alternatively, the potato strips may be coated and parfried and subjected to a second coating and parfrying step prior to freezing.

The potato strips are then frozen, packaged and preferably stored at a temperature below 0°F until they are prepared for final consumption. In order to prepare the potato strips for consumption, they are cooked either by finish frying or by baking in an oven. After such preparation, potato strips prepared according to the invention are characterized by a crisp outer layer, a moist tender interior and improved flavor qualities.

Any of a variety of starches including potato, tapioca, wheat and corn starches may be used according to the invention. One preferred corn starch for use according to the invention which is not a modified cornstarch is high amylose corn starch. High amylose corn starch is desired for use in the dust coating compositions of the invention provided that sufficient levels of modified corn starches are incorporated so as to desirably modify the overall properties of the coating composition.

Other preferred modified starches are those which are modified by oxidation such as by chlorine oxidation. Alternatively, starches may be modified by being substituted such as by acetylation or hydroxypropylation. A preferred acetylated cornstarch is that having a acetylation level of from 1% to 2.5% while a preferred hydoxypropyl starch is that having a hydroxypropylation level of from 2% to 10%.

Potato and tapioca starches remain the major components of the coating batters of the invention because of their unique properties. Potato and tapioca starches have bland flavor, excellent film-forming properties, good clarity after cooking, larger molecular weight of amylose and larger starch granule size than any other starches. These properties contribute to the formation of a crispy coating on french fries which they are used to coat.

Minor amounts of pregelled potato starches are preferably used in the compositions of the invention to provide viscosity control and suspension of the solids in the batter. Specifically, the dust coating composition may have an as is solids content of up to about 5% by weight of a modified pregelled potato starch for viscosity control. One preferred modified pregelled potato starch having a crosslinking level of about 230 ppm is for such use is available commercially as PenPlus® 40 (Penford Food Ingredients Co., Englewood, CO) which is preferably incorporated into the batter composition at a solids concentration of 2% to 5% by weight.

The modified potato starches used in practice of the invention are crosslinked with any of a variety of agents according to methods well known to the art but are preferably crosslinked with phosphorus oxychloride under alkaline conditions. Sodium trimetaphosphate is useful for crosslinking but reacts more slowly than does phosphorus oxychloride and accordingly substantially more reagent is required to achieve the same level of crosslinking as would be achieved with phosphorus oxychloride. Adipic anhydride is also useful as a crosslinking agent but reacts even more slowly than does sodium trimetaphosphate. Less preferably, epichlorhydrin may also be used at equivalent levels of crosslinking. Preferred crosslinked starches according to the invention include those characterized by crosslinking levels of from 550 ppm to 900 ppm based upon dry weight of starch of phosphorus oxychloride added during the crosslinking reaction or their equivalent as produced by other crosslinking reactions. A particularly preferred starch for use with the invention is a ungelatinized potato starch crosslinked with phosphorus oxychloride at a concentration of 675 ppm (POCl₃) (XC190-01, Penford Food Ingredients Co., Englewood CO).

Different starches having different levels of crosslinking, and thus exhibiting different viscosities, may be used together in practice of the invention. For example, one modified starch having a crosslinking level of 300 ppm and characterized by a relatively high viscosity may be used in conjunction with another modified starch having a crosslinking level of 1000 ppm and characterized by a relatively low viscosity to yield a blend of modified starches characterized by a crosslinking level and having a viscosity intermediate between those of the two components. It is noted that United States Food and Drug Administration regulations prohibit the use in food products of starches having greater than 1000 ppm POCl₃ crosslinking (based on dry weight of starch solids.) Thus, other potato starches which are crosslinked at a concentrations too high or too low and thus are characterized by viscosities inappropriate for use alone in practice of the invention can be used in conjunction with other potato starches provided that the overall potato starch component is characterized by a viscosity within the desired range. Nevertheless, it is generally preferred that the majority (i.e., greater than 50% by weight) of the potato starch component comprise a single unblended modified potato starch characterized by a viscosity of from about 200 to about 1100 BU according to the specified method being particularly preferred.

The method for determining the viscosity of ungelatinized crosslinked starches for use according to the invention utilizes a Brabender Amylograph viscometer according to conventional methods known to the art as set out below. Specifically, 45.0 grams of "dry basis" potato starch (to yield 9% solids) is placed in a beaker to which distilled water is added to make up 450 grams and is mixed thoroughly with a magnetic stirring bar. The pH of the mixture is adjusted to 7.0 with dilute (approx. 0.5%) NaOH or dilute (approx. 0.5%) HCl. The pH should be determined over a period of 5 to 10 minutes and should be measured both before and after the viscometer run. The starch slurry is then added to the viscometer bowl and the beaker rinsed with distilled water to give a total starch and water weight of 500 grams. The Brabender Amylograph is then run on program 2 comprising a starting temperature of 25°C, a heating rate of 1.5°C/minute to 95°C, running at 95°C for 15 minutes wherein the measurement is taken at the conclusion of 15 minutes in Brabender units (BU), and cooling at 1.5°C/minute to 50°C.

The starches of the invention may also be further modified by acetylation or hydroxypropylation but such modification is not necessary for practice of the invention. If the starches are so modified, it is generally necessary to change the level of crosslinking in order to obtain an equivalent level of viscosity.

A particularly preferred gelatinizable component of the dry coating formulations of the invention is rice flour which is preferably present at a solids concentration of from about 10% to about 45% by weight ad higher to as high as 60% or 75% by weight with concentrations of from about 15% to about 25% by weight (as is solids basis) being preferred. Rice flours suitable for use with the invention include long grain, medium/short grain or waxy rice with long grain rice flour being preferred. Long grain rice provides the best results for crispness, because of its higher amylose content in the starch.

A variety of other flours ad starches may optionally be used in producing the coating formulations of the invention including but not limited to potato flour, wheat flour, wheat starch, oat flour, oat starch, tapioca starch, corn flour and corn starch. Such starches may be crosslinked and/or substituted such as by acetylation, hydroxypropylation or other means.

Other suitable ingredients include gums such as guar and xanthan gums which are preferably added as components of blends with crosslinked potato starch products. Preferred gum blends comprise approximately 10% gum by weight and are preferably incorporated into the compositions of the invention at solids concentrations of less than 0.1% gum by weight.

Leavening agents in the form of baking powders may also be incorporated into the compositions of the invention in order to open up the structure of the coating batters upon cooking and release moisture from the french fry products without blowing off the coating layer. Suitable baking powders include sodium bicarbonate plus one or more leavening acids such as those in the group consisting of sodium aluminum phosphate (SALP), sodium aluminum sulfate (SAS), sodium acid pyrophosphate (SAPP), dicalcium phosphate (DCP), and anhydrous monocalcium phosphate (AMCP). The combination of sodium bicarbonate and SALP is preferred because of its bland flavor and slower action. SAPP and DCP give off-flavor in the coating and AMCP reacts too fast during mixing of the batter. Such leavening agents are preferably added at sodium bicarbonate concentrations of about 0.05 to 0.1%.

Additional ingredients include protein components such as sodium caseinate, nonfat dry milk, soy, whey, dried egg whites. Such proteins interact with the carbohydrates in the coating compositions to increase film strength, provide structure, improve crispness and prolong holding of crispness. Milk proteins perform better than egg whites or soy proteins in performing such functions. Other ingredients include carbohydrate components such as methyl cellulose, hydroxypropyl methyl cellulose, microcrystalline cellulose and the like. Still other optional ingredients may also be incorporated into the coating formulations of the invention including salt, flavorings, seasonings and coloring agents such as whey or dextrose. A particularly preferred dextrose product is available commercially as Cantab® (Penford Food Ingredients Co., Englewood, CO).

Other aspects and advantages of the present invention will be understood upon consideration of the following illustrative and comparative examples.

### Example 1

According to this example, potato strips were prepared according to conventional methods and dust-coated with a coating composition according to the invention. Specifically, Russet-Burbark potatoes were peeled, cut into 9/32 inch strips and immersed and blanched in hot water for 13 minutes at 165°F. After blanching, the potato strips were immersed for 30 seconds in an aqueous solution comprising 0.5% SAPP based on total weight of water which was held at a temperature of 160-170°F. After removal, the strips were drained and then dried in a conventional dryer at 190°F, for a sufficient length of time to effectuate a 12 to 20 percent water loss.

Coating compositions were then prepared comprising the ingredients listed in Table 1 with 1A applying 20 grams dry dusting mix per 300 grams of potato strips and 1B applying 30 grams dry mix per 300 grams of potato strips. (Although 20 grams or 30 grams respectively were applied to 300 grams of potato strips, actual pickup was generally less than the entire 20 or 30 grams.) The coating compositions were prepared by dry blending the ingredients listed in Table 1. The ingredients were shaken by hand and were ground to form a dust in a Thomas Wiley mill equipped with a 0.5 mm pore size screen so that 100% of the product would pass through a U.S. Standard No. 100 screen. The potato strips were then parfried at 360°F for 30 to 40 seconds and frozen in a brown paper wrapper. The potato strips were then finish fried at 360°F for three minutes and the resulting french fries were evaluated for crispness and weight loss with the crispness results measured on a scale of 0-6.0 with 0 being least crisp and 6.0 being most crisp. The minimum acceptable score for crispness was about 3.0 to 3.5. The results as presented in Table 1 show that the products are characterized by high levels of crispness measured on a scale of 0-6.0 with 0 being least crisp and 6.0 being most crisp. The minimum acceptable score for crispness was about 3.0 to 3.5. The resulting products were then tested to evaluate their properties and the time period for which they maintained their crispness.

**Table 1**

| Ingredients | 1A (20g mix/300g strips) | 1B (30g mix/300g strips) |
|---|---|---|
| Hydrolyzed Potato Starch (DE 0.5) (Sta Slim 143) (cookup) | 55.26% | 55.26% |
| Crosslinked Potato Starch (900 ppm) (cookup) | 10.72% | 10.72% |
| Modified Potato Starch PP-40 (pregelled) | 1.46% | 1.46% |
| Guar Gum Blend | 0.22% | 0.22% |
| Maltrin 040 | 5.35% | 5.35% |
| SAPP#28 | 1.17% | 1.17% |
| Soda | 0.96% | 0.96% |
| Salt | 4.79% | 4.79% |
| Rice Flour | 20.07% | 20.07% |
| TOTAL % | 100.00% | 100.00% |

| Evaluation of Crispness (0-6) | | |
|---|---|---|
| 5 min. | 6 | 6 |
| 10 min. | 6 | 6 |
| 15 min. | 5.5 | 6 |
| 20 min. | 5.5 | 5.5 |
| Pickup % | 4.4 | 7.8 |

### Example 2

According to this example, potato strips were prepared according to the method of Example 1 but wherein various combinations of hydrolyzed potato starch, hydrolyzed oat product, and crosslinked potato starch were used in combination with a hydrocolloid hydroxymethyl cellulose (Methocel K4M). The results reported in Table 2 show that all variations held crispiness well with the exception of formula 2C. It is believed that the presence of the hydrocolloids may be contributing to the exhibition of toughness.

Sample 2A had a nice bite and a very clean flavor. Sample 2B had a severely rough, clumpy surface. Sample 2E had a mosaic surface; very, very, very, very crunchy (greater than 6.0). Sample 2G had a very, very delicate crunch. Samples 2F and 2G were "scaley" in appearance. Sample 2A looked good on the surface, fried great; no sticking. Sample 2B had very clumpy batter on surface; surface very jagged. Sample 2C the surface was scaley, but no sticking observed. Sample 2D had a very, very rough surface; very, very dark after parfry. Sample 2E had an extremely dark surface after parfry; nice surface. Sample 2F had a dark but nice surface. Sample 2G fries had a powdery surface before frying; good color, surface is slightly gritty. *t = slight textural toughness, *T = substantial textural toughness.

**Table 2**

| **Variation** | **2A** | **2B** | **2C** | **2D** | **2E** | **2F** | **2G** |
|---|---|---|---|---|---|---|---|
| **INGREDIENT** | | | | | | | |
| Hydrolyzed Potato Starch (DE=0.3) (cookup) | 20 | 15 | 15 | | | | |
| Oat Fiber (Oat Trim 5Q) | | 5 | | 20 | | | |
| Methocel | | | 5 | | | | |
| Na CMC | | | | | 20 | 10 | |
| Crosslinked Potato Starch (900 ppm) (cookup) | | | | | | 10 | 20 |
| | | | | | | | |

| Evaluation: | | | | | | | |
|---|---|---|---|---|---|---|---|
| 5 minutes | 6 | 6 | 3.5 | 6 | 6 | 6 | 6 |
| 10 minutes | 6 | 5 | 3.5t | 5.5 | 6 | 5.5 | 5.5 |
| 15 minutes | 5.5 | 5 | 3T | 5 | 6 | 5 | 5 |
| 20 minutes | 5.5 | 4.5 | 2T | 5 | 6 | 5 | 5 |
| % Pick-Up | 4.9 | 2.6 | 4.1 | 4 | 3.7 | 5.8 | 5.3 |

### Example 3

According to this example, potato strips were prepared according to the method of Example 1 wherein hydrolyzed potato starch, hydrolyzed dent corn starch, crosslinked potato starch and native potato starch having no chemical modification were evaluated with and without the hydrocolloid sodium carboxymethylcellulose. The results reported in Table 3 show good results for all of the compositions.

Only samples 3A and 3G showed any sticking during frying. Samples 3E, 3F and 3G showed no sticking whatsoever. The other samples were good. Na CMC in addition to starch causes sticking problems. Dusting 3D shows lots of sticking. Na CMC helps add crunch to fries. Dusting 3G is rough. *t = slight textural toughness. *T = substantial textural toughness.

**Table 3**

| **Variation** | **3A** | **3B** | **3C** | **3D** | **3E** | **3F** | **3G** | **3H** | **3I** | **3J** |
|---|---|---|---|---|---|---|---|---|---|---|
| **INGREDIENT** | | | | | | | | | | |
| Hydrolyzed Potato Starch (DE=0.3) (cookup) | 18 | | | | | | 10 | 10 | 9 | 9 |
| Hydrolyzed Dent Corn Starch (cookup) | | 18 | | | | 20 | 10 | | 9 | |
| Crosslinked Potato Starch (900 ppm) (cookup) | | | 18 | | | | | 10 | | 9 |
| Unmodified Potato Starch (cookup) | | | | 18 | 20 | | | | | |
| Na CMC | 2 | 2 | 2 | 2 | | | | | 2 | 2 |
| Total | 20g | 20g | 20g | 20g | 20g | 20g | 20g | 20g | 20g | 20g |
| | | | | | | | | | | |

| **SAMPLE** | | | | | | | | | | |
|---|---|---|---|---|---|---|---|---|---|---|
| 5 minutes | 6 | 6 | 5.5 | 6 | 6 | 6 | 6 | 6 | 6 | 6 |
| 10 minutes | 6 | 6 | 5.5 | 6 | 5.5 | 5.5 | 6 | 6 | 6 | 6 |
| 15 minutes | 6 | 6 | 5T | 6t | 4.5 | 5.5 | 6 | 6 | 6t | 5.5 |
| 20 minutes | 6 | 6 | 4.5T | 5.5t | 4 | 5.5 | 6 | 6 | 6T | 5.5 |
| % Pick-Up | Not measured | 4.5 | 4.5 | 4.6 | 4.9 | 4.9 | 4.2 | 3.5 | 4.9 | 3.9 |

### Example 4

According to this example, potato strips were prepared according to the method of Example 1 wherein a variety of starch types including hydrolyzed potato starch, hydrolyzed dent corn starch, hydrolyzed and crosslinked potato starch, hydrolyzed tapioca starch, hydrolyzed wheat starch, and hydrolyzed waxy maize corn starch. These starches were used in combination with the hydrocolloid sodium carboxymethylcellulose. The results reported in Table 4 show good results for all of the compositions.

**Table 4**

| **Variation** | **4A** | **4B** | **4C** | **4D** | **4E** | **4F** | **4G** |
|---|---|---|---|---|---|---|---|
| **Formulas:** | **grams per variation** | | | | | | |
| **Ingredient** | | | | | | | |
| Hydrolyzed Potato Starch (DE=0.3) (cookup) | 19.5 | | | | | | |
| Hydrolyzed Dent. Corn Starch (cookup) | | 19.5 | | | | | |
| Hydrolyzed and Crosslinked Potato Starch (cookup) | | | 19.5 | | | | |
| Hydrolyzed and Crosslinked Potato Starch (cookup) | | | | 19.5 | | | |
| Hydrolyzed Tapioca Starch (cookup) | | | | | 19.5 | | |
| Hydrolyzed Wheat Starch (cookup) | | | | | | 19.5 | |
| Na CMC | 0.5 | 0.5 | 0.5 | 0.5 | | | 0.5 |
| Hydrolyzed Waxy Corn Starch (cookup) | | | | | | | 19.5 |
| Total | 20 | 20 | 20 | 20 | 20 | 20 | 20 |

| Evaluation: | | | | | | | |
|---|---|---|---|---|---|---|---|
| 5 min. | 6 | 6 | 6 | 5.5 | 5.5 | 6 | 6 |
| 10 min. | 6 | 6 | 6 | 5 | 4.5 | 5.5 | 6 |
| 15 min. | 5 | 5 | 6 | 4.5 | 4 | 4.5 | 6 |
| 20 min. | 5 | 5 | 5.5 | 4 | 3.5 | 5 | 6 |
| % Pick-Up | 5 | 4.4 | 4.6 | 4.3 | 5.7 | 4.1 | 5.8 |

### Example 5

According to this example, potato strips were prepared according to the method of Example 1 wherein a hydrolyzed potato starch was combined with varying levels of sodium carboxymethylcellulose and with other hydrocolloids including xanthan gum, guar gum and methocel K4M. The results reported in Table 5 show acceptable results for all of the compositions.

**Table 5**

| **Variation** | **5A** | **5B** | **5C** | **5D** | **5E** | **5F** | **5G** | **5H** | **5I** |
|---|---|---|---|---|---|---|---|---|---|
| **INGREDIENT** | | | | | | | | | |
| Hydrolyzed Potato Starch (DE=0.3) (cookup) | 20 | 19.9 | 19.8 | 19.7 | 19.6 | 19.95 | 19.9 | 19.9 | 19.9 |
| Na CMC | | 0.1 | 0.2 | 0.3 | 0.4 | 0.05 | | | |
| Xanthan Gum | | | | | | | 0.1 | | |
| Guar Gum | | | | | | | | 0.1 | |
| Methocel | | | | | | | | | 0.1 |
| Total | 20 | 20 | 20 | 20 | 20 | 20 | 20 | 20 | 20 |
| | | | | | | | | | |

| Evaluation: | | | | | | | | | |
|---|---|---|---|---|---|---|---|---|---|
| 5 min. | 6 | 6 | 6 | 6 | 6 | 6 | 6 | 6 | 6 |
| 10 min. | 6 | 6 | 5 | 6 | 6t | 6t | 6 | 6 | 6 |
| 15 min. | 6 | 6 | 5 | 5.5 | 5 | 5 | 5.5 | 5.5t | 5.5t |
| 20 min. | 6 | 6t | 51 | 5.5t | 5t | 5t | 5t | 5t | 5t |
| % Pick-Up | 5.1 | 4.9 | 5.1 | 5 | 5.1 | 5.2 | 4.5 | 4.2 | 4.6 |

### Example 6

According to this example, potato strips were prepared according to the method of Example 1 wherein a hydrolyzed potato starch was used alone at vanous concentrations to coat potato strips. The results reported in Table 6 show acceptable results for all of the compositions.

**Table 6**

| Ingredients | **6A** | **6B** | **6C** | **6D** | **6E** | **6F** | **6G** |
|---|---|---|---|---|---|---|---|
| Hydrolyzed Potato Starch (DE=0.3) (cookup) | 100.00% | 100.00% | 100.00% | 100.00% | 100.00% | 100.00% 100.00% | |
| Total % | 100.00% | 100.00% | 100.00% | 100.00% | 100.00% | 100.00% | 100.00% |
| Dust Application | 6.66% | 6.33% | 6.00% | 5.66% | 5.33% | 5.00% | 4.66% |

| Evaluation | | | | | | | |
|---|---|---|---|---|---|---|---|
| 5 min. | 6 | 6 | 6 | 6 | 6 | 6 | 5.5 |
| 10 min. | 6 | 6 | 6 | 5.5 | 6 | 6 | 5.5 |
| 15 min. | 5.5 | 5 | 5.5 | 5.5 | 5.5 | 5.5 | 5t |
| 20 min. | 5.5 | 5 | 5 | 5 | 5.5 | 5t | 4.54 |
| % Pick-Up | 5.1 | 4.3 | 4 | 4.4 | 4.3 | 3.9 | 4.1 |
| *t = slight textural toughness | | | | | | | |

### Example 7

According to this example, potato strips were prepared according to the method of Example 6 wherein the hydrolyzed potato starch of Example 6 was used in combination with other ingredients to coat potato strips. The results are reported in Table 7 and show good, acceptable results for all of the compositions.

**Table 7**

| **Variation** | **7A** | **7B** | **7C** | **7D** | **7E** | **7F** | **7G** | **7H** | **7I** |
|---|---|---|---|---|---|---|---|---|---|
| **Ingredients** | | | | | | | | | |
| Hydrolyzed Potato Starch (DE=0.3) (cookup) | 13 | 12 | 11 | 10 | 10 | 10 | 10 | 10 | |
| Rice Flour | | | | | 7 | 8 | 9 | 6 | 20 |
| Salt | | | | | 3 | 2 | 1 | 4 | |
| Total | 13 | 12 | 11 | 10 | 20 | 20 | 20 | 20 | 20 |

| Evaluation: | | | | | | | | | |
|---|---|---|---|---|---|---|---|---|---|
| 5 min. | 6 | 6 | 6 | 6 | 6 | 6 | 6 | 6 | 5.5 |
| 10 min. | 6 | 6 | 5 | 6 | 5 | 5 | 5 | 5 | 5 |
| 15 min. | 5.5 | 5.5 | 5 | 5.5 | 5 | 5 | 5 | 5 | 4.5 |
| 20 min. | 5 | 5 | 4.5 | 5 | 5 | 5 | 5 | 5 | 3.5 |
| % Pick-Up | 3 | 3.2 | 2.8 | 2.7 | 5.4 | 5.6 | 5.7 | 5.6 | 3.9 |

### Example 8

According to this example potatoes were cut to form strips and blanched at 165°F for six minutes. After blanching, the potato strips were immersed for 45 seconds in an aqueous solution comprising 2.4% salt and 0.2% SAPP based on total weight of water which was held at a temperature of 160°-170°F. After removal, the strips were drained and then dried in a conventional dryer at 180°F for a sufficient length of time to effectuate a 12 to 20 percent water loss. Various dry components were applied to the surface of potato strips by adding the dry components at a ratio of 6% by weight of the potato strips to a sealed container and then shaking. The potato strips were then immediately parfried for 40 seconds at 370°F. The potato strips were then frozen and held overnight before evaluating. The results are reported in Table 8 which shows that the resulting strips had generally poor crispness results after 15 minutes with the dextrin coating providing the best results.

**Table 8**

| | Composition | Pickup (%) | Crispness @ 15 min. |
|---|---|---|---|
| 8A | Crosslinked Tapioca Starch (450 ppm) (cookup) | 5.56 | 1.0/0.5 |
| 8B | Crosslinked potato starch (900 ppm) (cookup) | 5.54 | 0.5/1.0 |
| 8C | Rice Flour | 4.0 | 0.5/1.0 |
| 8D | SAPP/Soda | 4.64 | 3.0/2.5 |
| 8E | Dextrin | 5.35 | 3 |
| 8F | High amylose corn starch (70% amylose) (cookup) | 4.19 | 0.5 |

### Example 9

According to this example potatoes were cut to form strips and blanched, brined and dried according to the method of Example 8. Various dry components were applied to the surface of 300 grams of potato strips by adding either 20 grams or 15 grams of the dry components to the potato strips in a sealed container and then shaking. The potato strips were then allowed to equilibrate for 10 minutes before being parfried for 40 seconds at 370°F. The potato strips were then frozen and held overnight before evaluating. The results are reported in Table 9 which shows good crispness results for most of the resulting strips.

Of particular interest are the results which report the % loss by weight of coating after parfrying. These results show that the dry coating comprising either hydrolyzed or oxidized starches perform the best with respect to coating efficiencies while those comprising crosslinked starches perform the worst.

During repeated trials of the methods set out above comparable or even somewhat worse results were obtained with respect to crispiness, but similar results were obtained with respect to coating loss. In particular, it remained the case that hydrolyzed and oxidized starches had lower losses than did unmodified starches and crosslinked starches had the highest loss rates.

When the compositions of this example were applied as an aqueous slurry, higher pickup values were observed but the resulting french fries tended to have worse crispness results when measured at 15 minutes than did their dry coated counterparts.

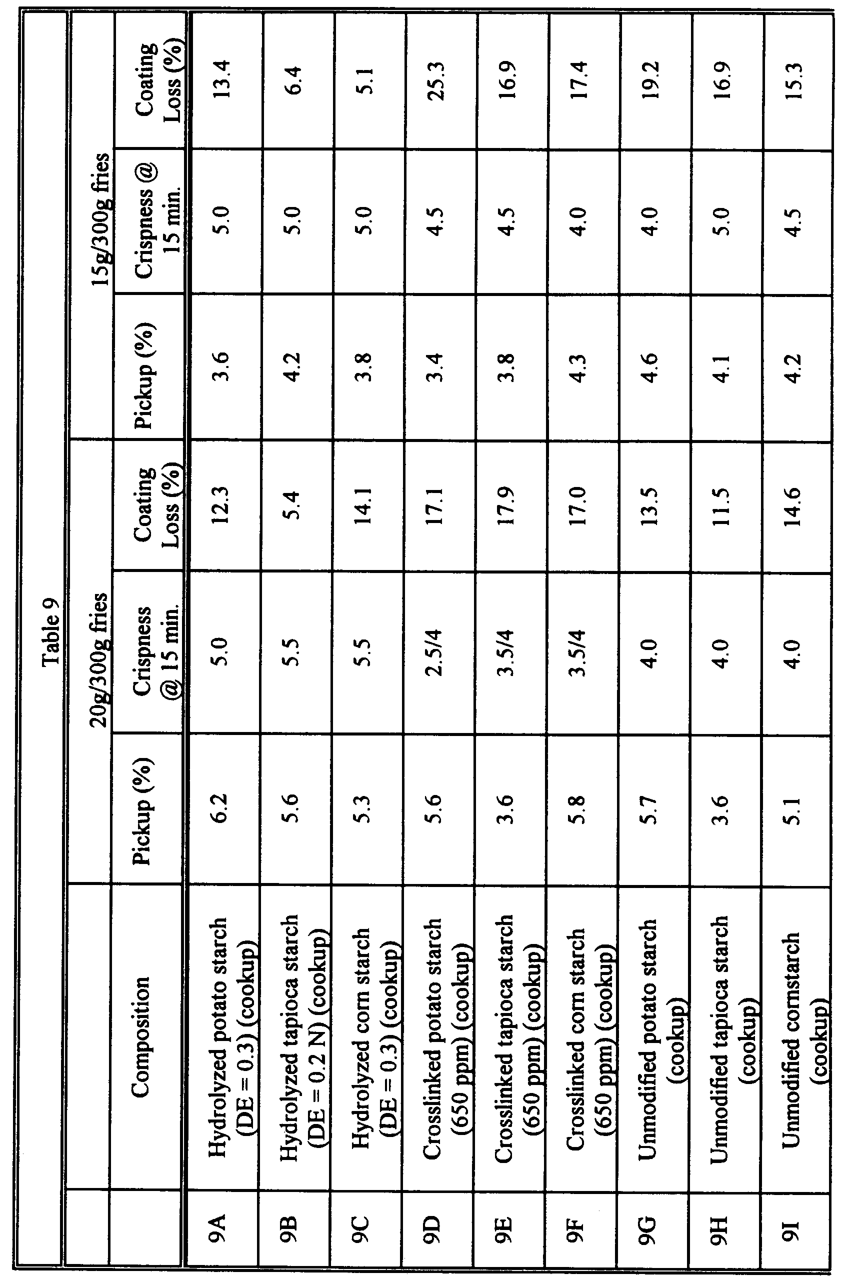

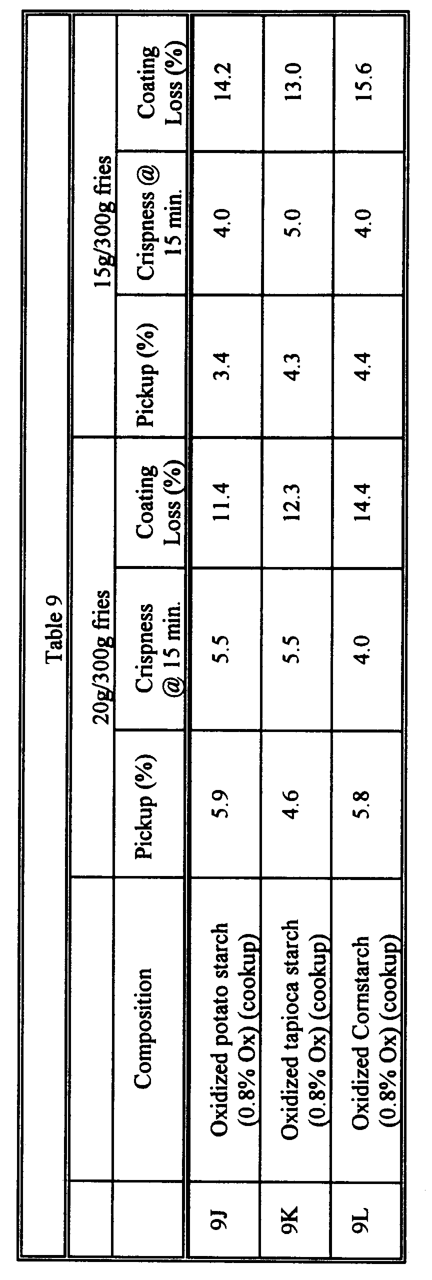

### Example 10

According to this example, either 15 grams or 20 grams of the compositions of Example 9 were applied according to the method of that example to (but not necessarily picked up by) 300 grams of potato strips. The coated strips were then tested for oil uptake. The results set out in Table 10 below show that the coatings comprising crosslinked starches had the lowest oil uptake followed by oxidized starches and hydrolyzed starches having somewhat higher oil uptake, with the coatings comprising unmodified starches having the highest oil uptake.

**Table 10**

| | 20 gm Oil Uptake (%) | 15 gm Oil Uptake (%) |
|---|---|---|
| Hydrolyzed potato starch (DE = 0.3) (cookup) | 10.21 | 8.52 |
| Hydrolyzed tapioca starch (DE = 0.2 N) (cookup) | 12.41 | 8.95 |
| Hydrolyzed corn starch (DE = 0.3) (cookup) | 9.50 | 8.93 |
| Crosslinked potato starch (650 ppm) (cookup) | 8.79 | 6.50 |
| Crosslinked tapioca starch (650 ppm) (cookup) | 6.71 | 8.18 |
| Crosslinked corn starch (650 ppm) (cookup) | 7.00 | 6.54 |
| Unmodified potato starch (cookup) | 8.76 | 10.90 |
| Unmodified tapioca starch (cookup) | 8.03 | 10.77 |
| Unmodified cornstarch (cookup) | 8.08 | 10.21 |
| Oxidized potato starch (0.8% Ox) (cookup) | 7.23 | 8.05 |
| Oxidized tapioca starch (0.8% Ox) (cookup) | 7.44 | 6.84 |
| Oxidized Cornstarch (0.8% Ox) (cookup) | 7.11 | 6.36 |

### Example 11

According to this example, various dust coating compositions were formulated comprising the basic formula set out below but wherein the crosslinked (650 ppm) tapioca starch was replaced with the same components set out in Table 9. The potato strips were prepared according to the method of Example 9 by adding 300 grams of potato strips to either 20 grams or 30 grams of the dry components (although not all of the dry components were necessarily picked up by the strips). Thus, the basic formula comprised the following:

| Component | Weight (%) |
|---|---|
| Crosslinked Tapioca (650 ppm) (cookup) | 56.2 |
| Crosslinked Potato Starch (900 ppm) (cookup) | 3.0 |
| Crosslinked Potato Starch (213 ppm) (cookup) | 0.1 |
| Methocel KM | 0.3 |
| Salt | 5.0 |
| SAPP 28 | 0.8 |
| Soda | 0.6 |
| Rice Flour | 34.0 |
| Total | 100.0 |

The resulting french fry products were evaluated for pickup, crispness after 15 minutes on a 0-6 scale and coating loss. The results set out in Table 11 below show that the formulations comprising the oxidized or hydrolyzed starches have lower loses from parfrying than do those comprising unmodified or particulary crosslinked starches as their primary component. With respect to crispness, the compositions comprising hydrolyzed or crosslinked starches as their major components exhibited the best results.

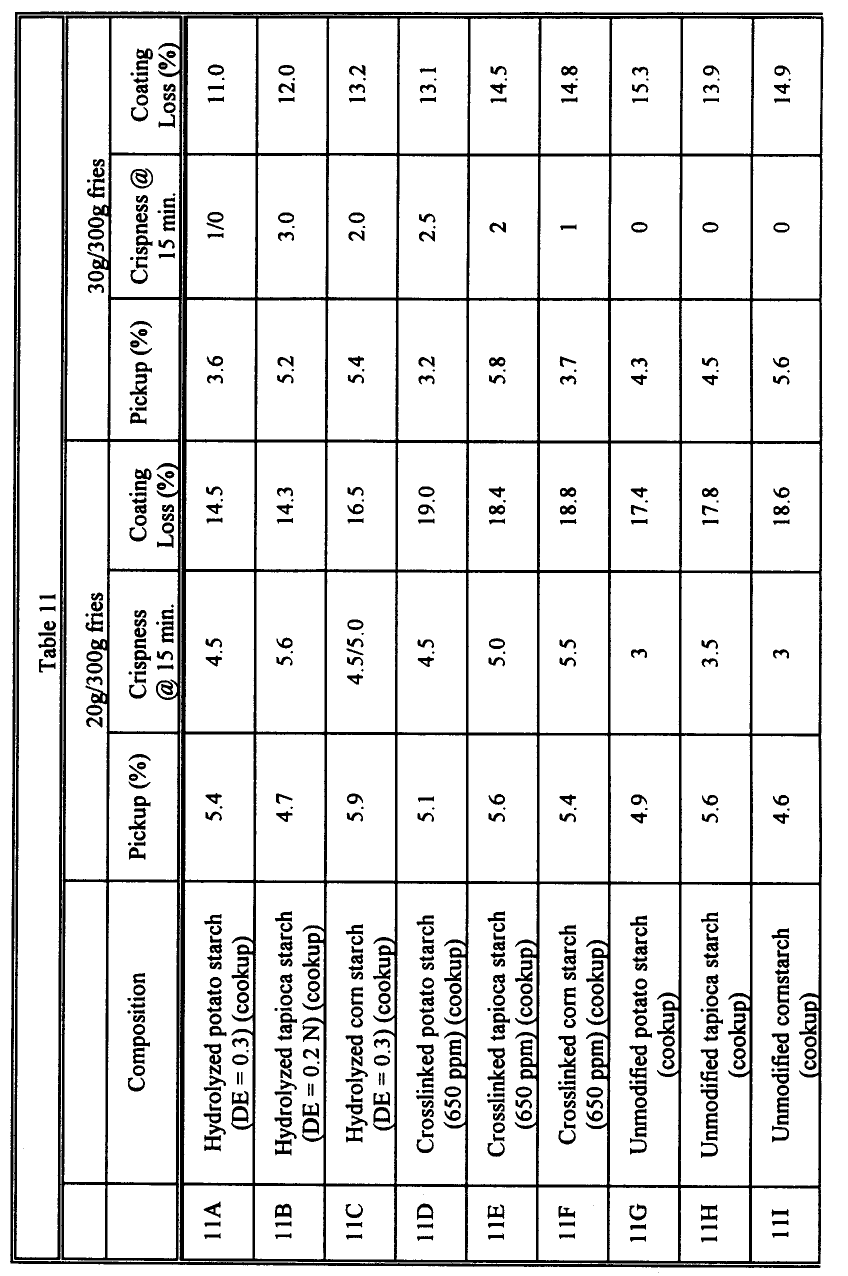

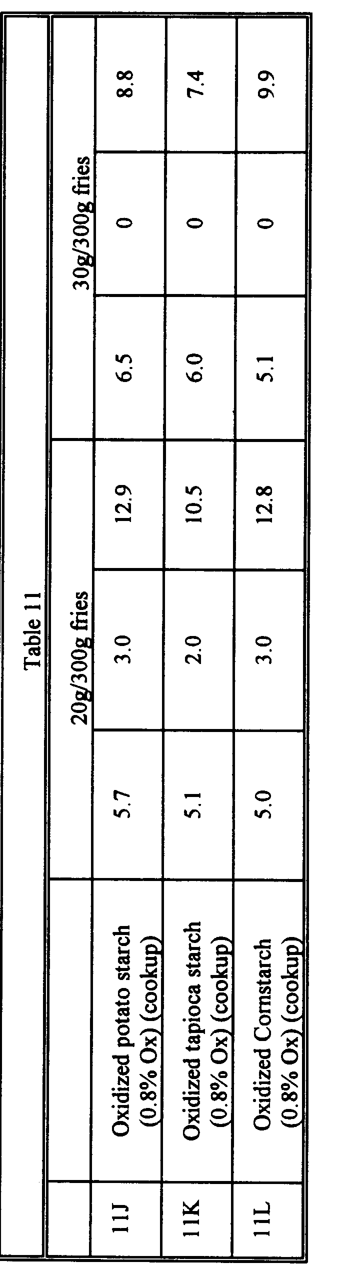

### Example 12

According to this example, potato strips were prepared according to conventional methods and dust-coated with a dry coating composition according to the invention. Specifically, Russet-Burbank potatoes were peeled, cut into 9/32 inch strips and immersed and blanched in hot water for 6 minutes at 185°F. After blanching, the potato strips were immersed for 45 seconds in an aqueous solution comprising 1.5% salt and 0.9% SAPP (% based on total fluid volume) which was held at a temperature of 165°F. After removal, the strips were drained and then dried at room temperature for about 10 minutes before dusting.

Coating compositions were prepared comprising the ingredients listed in Table 12 according to the following procedure in which the starch components and starch like components were individually pregelled and then combined. Specifically, 5 pounds of each oxidized starch was individually slurried by hand into 2 gallons of water. The individual starches were then pregelled by applying the slurry to a roll drier having a stainless steel roll heated to about 370°F wherein the dried material was removed from the roll after a drying time of 3 to 5 seconds by use of a doctor blade. The resulting pregelled starches and the remaining components of Table 12 were then dry blended by shaking by hand. The dried material was then collected and ground in a Thomas Wiley mill equipped with a 0.5 mm pore size screen so that 100% of the product would pass through a U.S. Standard No. 100 screen.

The coating compositions produced above were used to coat the strips according to the general method of Example 9 applying 20 grams of dry mix per 200 grams of potato strips. The potato strips were then parfried at 360°F for 30 to 40 seconds and frozen in a brown paper wrapper. The potato strips were then finish fried at 360°F for three minutes and the resulting french fries were evaluated for crispness and weight loss with the crispness results measured on a scale of 0-6.0 with 0 being least crisp and 6.0 being most crisp. The minimum acceptable score for crispness was about 3.0 to 3.5. The resulting products were then tested to evaluate their properties and the time period for which they maintained their crispness. The results as presented in Table 12 show that the products are characterized by high levels of crispness.

**Table 12**

| Variation/Ingredients | **12A** | **12B** | **12C** | **12D** | **12E** | **12F** | **No Dusting** |
|---|---|---|---|---|---|---|---|
| Oxidized Corn Starch (0.4% Cl₂) (pregel) | 83 | | | | | | |
| Oxidized Corn Starch (0.8% Cl₂) (pregel) | | 83 | | | | 83¹ | |
| Oxidized Potato Starch (0.4% Cl₂) (pregel) | | | 83 | | | | |
| Oxidized Potato Starch (0.8% Cl₂) (pregel) | | | | 83 | | | |
| Potato Dextrin (15-20% soluble) | 14.8 | 14.8 | 14.8 | 14.8 | 97.8 | 14.8 | |
| SAPP #4 | 1.1 | 1.1 | 1.1 | 1.1 | 1.1 | 1.1 | |
| Soda | 0.9 | 0.9 | 0.9 | 0.9 | 0.9 | 0.9 | |
| Gellan Gum | 0.2 | 0.2 | 0.2 | 0.2 | 0.2 | 0.2 | |

| Evaluation: | | | | | | | |
|---|---|---|---|---|---|---|---|
| Weight Loss (%) | 19.1 | 21.4 | 16.9 | 11.2 | 8.3 | 8.0 | 16.0 |
| After Parfrying | | | | | | | |
| Weight Loss (%) After Finish Frying | 20.3 | 22.3 | 18.0 | 11.7 | 8.3 | 8.0 | 16.4 |
| Comments | Good Crispness at 5 min. Loses Crispness at 7 min. | Good Crispness at 5 min. Loses Crispness at 7 min. | Good Crispness at 5 min. Loses Crispness at 10 min. | Good Crispness at 5 min. Loses Crispness at 10 min. | Crispness remains past 15 min. | Crispness remains past 15 min. | Not crispy at 5 min. |

| | | | | | | | |
|---|---|---|---|---|---|---|---|
| ¹Finely Ground (passes through a 200 mesh). | | | | | | | |

According to the following examples, dry coating compositions were prepared in which the starch components were subjected to gelatinization in the presence of some or all of a second gelatinizable component of the dust coating composition.

### Example 13

According to this method, potato strips were prepared according to a preferred alternate coating method in which various of the starch and non-starch carbohydrate components were blended and subjected to gelatinization prior to final blending. Specifically, for experimental runs 13A-D, the components listed in Table 13-1 were dry blended and subjected to gelatinization by roll drying according to the method of Example 12. The roll dried mixture was then further dry mixed with the components listed in Table 13-2. The dried material was then collected and ground in a Thomas Wiley mill equipped with a 0.5 mm pore size screen so that 100% of the product would pass through a U.S. Standard No. 100 screen.

The coating compositions were then used to coat potato strips according to the method of Example 12 and the resulting products were then tested to evaluate their properties and their crispness over time with the results presented in Table 13-2.

These results were compared to those of experimental run 13X wherein each of the starch and additional gelatinizable components were separately gelatinized by roll drying as described above. Those components were then blended and used to coat potato strips according to the method of Example 12. The results of evaluation of those strips are reported in Table 13-2 and show very poor crispness results which were comparable to those of the no dusting control reported in that table.

**Table 13-1**

| Variation/Ingredients | 13Y (parts) | 13Z (parts) |
|---|---|---|
| Crosslinked (650 ppm) Potato Starch | -- | 54 |
| Crosslinked (200 ppm) Potato Starch | 46.1 | -- |
| Crosslinked (650 ppm) 4% Acetylated Potato Starch | 6.0 | 6.0 |
| Rice Flour | 25 | 21 |
| Xanthan Gum | -- | 0.1 |
| Salt | 5 | 3 |
| Maltodextrin | -- | 0.1 |
| Potato Dextrin | 10.15 | 14 |
| Tapioca Dextrin | 5.0 | -- |
| Methocel | 0.3 | -- |
| Dextrose | 0.25 | -- |
| Total | 97.8 | 98.2 |

**Table 13-2**

| Variation | **13A** | **13B** | **13C** | **13D** | **13X** | **No Dusting** |
|---|---|---|---|---|---|---|
| Ingredients | | | | | | |
| 13Y | ― | 98 | -- | 75 | -- | -- |
| 13Z | 98 | -- | 75 | -- | 98 | -- |
| SAPP #4 | 1.1 | 1.1 | 1.1 | 1.1 | 1.1 | -- |
| Soda | 0.9 | 0.9 | 0.9 | 0.9 | 0.9 | -- |
| Pregelled Rice Flour | -- | -- | 10.4 | 10.4 | -- | -- |
| Gellan Gum | -- | -- | 0.2 | 0.2 | -- | -- |
| Pregelled Dextrin | -- | -- | 7.4 | 7.4 | -- | -- |

| Evaluation | | | | | | |
|---|---|---|---|---|---|---|
| 5 min. | 5 | 5 | 5.5 | 5.5 | 3.5 | 3 |
| 10 min. | 5 | 5 | 5.5 | 5.5 | <1 | <1 |
| 15 min. | 4.5 | 5 | 5.5 | 5.5 | <1 | <1 |
| 20 min. | 4 | 4 | 5 | 5.5 | <1 | <1 |

Numerous modifications and variations in the practice of the invention are expected to occur to those skilled in the art upon consideration of the presently preferred embodiments thereof. Consequently, the only limitations which should be placed upon the scope of the invention are those which appear in the appended claims.

The features disclosed in the foregoing description, in the following claims and/or in the accompanying drawings may, both separately and in any combination thereof, be material for realising the invention in diverse forms thereof.

## Claims

1. A process for preparing a frozen potato product with a film-like coating on the outer surface which coating comprises greater than 60% by weight solids of a starch product comprising the steps of:
cutting the potatoes;
blanching the potatoes;
dust coating the potatoes with a dry composition comprising greater than 60% by weight solids of a starch product; and
freezing the potatoes.

2. The process of claim 1 wherein the starch product is selected from the group consisting of starch, modified starches and starch derivatives.

3. The process of claim 1 wherein the starch product is a oxidized starch.

4. The process of claim 1 wherein the starch product is a hydrolyzed starch.

5. The process of claim 4 wherein the hydrolyzed starch is a maltodextrin having a DE of from 0.1 and 10.

6. The process of claim 1 wherein the starch product is crosslinked.

7. The process of claim 1 further comprising the step of parfrying the potatoes prior to freezing them.

8. A coated potato product according to the method of claim 1.

9. A process for preping a frozen potato product with a film-like coating on the outer surface which coating comprises greater than 20% by weight solids of a starch product comprising the steps of:
cutting the potatoes;
blanching the potatoes;
dust coating the potatoes with a dry composition comprising greater than 20% by weight solids of a starch product; and
freezing the potatoes;
wherein the dry composition is pregelatinized and is prepared by the steps comprising:
(a) blending a starch component with a second gelatinizable component selected from the group consisting of starches, dextrins, flours and gums;
(b) subjecting the blend of step (a) to conditions so as to gelatinize the blend; and
(c) forming a dust.

10. The process of claim 9 wherein all of the gelatinizable components of said dry composition are subjected to steps (a), (b) and (c).

11. The process of claim 9 wherein the starch product is a oxidized starch.

12. The process of claim 9 wherein the starch product is a hydrolyzed starch.

13. The process of claim 12 wherein the hydrolyzed starch is a maltodextrin having a DE of from 0.1 and 10.

14. The process of claim 9 wherein the starch product is crosslinked.

15. The process of claim 9 further comprising the step of parfrying the potatoes prior to freezing them.

16. A coated potato product according to the method of claim 9.
